# FASCICULE DE BREVET EUROPEEN

(11) **EP 3 297 865 B1**
(45) Date de publication et mention de la délivrance du brevet: **02.12.2020**
(21) Numéro de dépôt: 16726913.3
(22) Date de dépôt: 21.04.2016
(51) Int. Cl.: B60K 11/08

(54) **SYSTEME D'ENTREE D'AIR AVEC MASQUAGE DE SA PAROI D'OBTURATION**
LUFTEINLASSSYSTEM MIT MASKIERUNG SEINER ABSPERRWAND
AIR INTAKE SYSTEM WITH MASKING OF ITS SHUT-OFF WALL

(30) Priorité: 22.05.2015 FR 1554658
(43) Date de publication de la demande: 28.03.2018
(73) Titulaire: PSA Automobiles SA, 78300 Poissy (FR)
(72) Inventeur: LE PENNEC, Xavier, 92100 Boulogne Billancourt (FR)
(74) Mandataire: Fernandez, Francis Lionel
(86) Numéro de dépôt international: PCT/FR2016/050938
(87) Numéro de publication internationale: WO 2016/189212

(56) Documents cités:
- EP-A1- 2 591 930
- DE-A1-102011 007 523
- US-A1- 2008 073 920

## Description

La présente invention concerne un système d'entrée d'air avec une grille faisant office d'entrée d'air, ce système étant destiné à une face avant d'un véhicule automobile et présentant en son intérieur une paroi d'obturation qu'il convient de masquer au maximum afin d'améliorer l'esthétisme du système perçu de l'extérieur et du devant du véhicule.

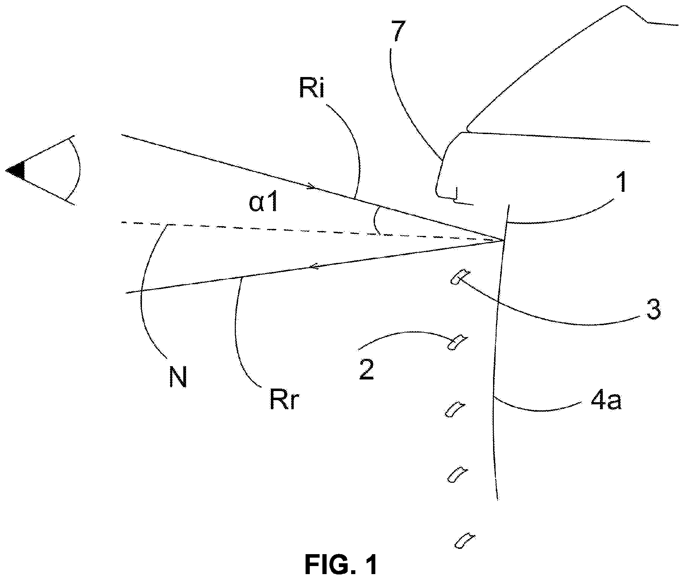

En se référant à la figure 1, qui montre un système d'entrée d'air conforme à l'état de la technique, cette figure illustre une portion de la face avant 7 d'un véhicule automobile comprenant un système 1 d'entrée d'air selon l'état de la technique. Un tel système 1 d'entrée d'air comprend une grille 2 d'entrée d'air munie de barreaux 3 formant une partie avant du système 1 par laquelle un flux d'air venant de l'extérieur pénètre perpendiculairement à la grille 2. Un seul barreau est référencé 3 à cette figure mais cette référence est valable pour tous les barreaux de la grille 2.

De manière connue, le système 1 d'entrée d'air comprend une paroi 4a d'obturation au moins partielle du flux d'air. En effet, il convient d'obturer la grille 2 d'entrée d'air après passage du flux d'air à travers la grille au moins partiellement et donc non intégralement pour qu'il y ait juste la bonne quantité d'air qui alimente le moteur du véhicule disposé en aval du système afin de garantir une consommation optimale de carburant pour le fonctionnement du moteur thermique du véhicule.

Cette paroi 4a d'obturation s'étend en aval d'au moins une portion de la grille 2 et à distance de la grille. Cette paroi 4a d'obturation est positionnée verticalement quand le système 1 est monté dans la face avant 7 du véhicule. Il en résulte que la paroi 4a d'obturation est visible du fait que les rayons lumineux provenant de l'extérieur du système d'entrée d'air sont réfléchis de sorte à être visibles par une personne se trouvant à l'extérieur devant le véhicule.

Comme il peut être vu à la figure 1, un rayon lumineux, appelé rayon incident Ri, rencontre la surface réfléchissante, c'est-à-dire la paroi 4a d'obturation en un point d'incidence. Ce rayon lumineux, dans le cas présent provenant d'un éclairage extérieur ou du soleil, est réfléchi par la surface réfléchissante 4a en donnant un rayon réfléchi Rr s'étendant dans le même plan que le rayon lumineux incident Ri.

De plus, soit la normale N au point d'incidence de la surface réfléchissante qui est la paroi 4a d'obturation se trouvant sensiblement verticale dans le système 1 d'entrée d'air, cette normale étant alors sensiblement horizontale, le rayon réfléchi Rr fait un angle α1 avec la normale qui est en valeur absolue le même que celui que fait le rayon lumineux incident Ri avec la normale N.

Il s'ensuit que pour une surface réfléchissante verticale comme l'est la paroi 4a d'obturation du système 1 d'entrée d'air, les rayons réfléchis Rr peuvent être captés par l'œil d'une personne se trouvant devant le véhicule, ce qui rend la paroi 4a d'obturation visible. Par exemple, les rayons lumineux en provenance du soleil impactent directement la paroi 4a d'obturation selon l'état de la technique qui les réfléchit en rendant cette paroi 4a d'obturation visible par une personne se trouvant devant le véhicule.

Ceci est à éviter principalement pour des raisons d'esthétisme, étant donné que la vue de la paroi 4a d'obturation affecte le caractère esthétique de la grille 2 et du système 1 d'entrée d'air.

Pour l'illustration d'un système d'entrée d'air classique, il sera fait référence au document EP-A-2 574 484. Ce document décrit, dans un tel système avec grille apte à être disposé sur une partie avant d'une carrosserie de véhicule, un dispositif d'obturation de grille comprenant une entrée d'air principale prenant l'air pour le faire circuler vers un échangeur de chaleur spécifique disposé dans le châssis du véhicule.

Le système comprend un mécanisme d'obturation s'ouvrant et se fermant pour commander le débit de l'air s'écoulant à partir de l'entrée d'air du système vers l'échangeur de chaleur spécifique. Il est aussi prévu une entrée d'air de dérivation permettant à l'air de contourner le mécanisme d'obturation pour guider l'air vers l'échangeur de chaleur spécifique.

Ce document ne décrit ni ne donne aucune suggestion quant à une possibilité de masquer la vue du dispositif d'obturation pour une personne se trouvant à l'extérieur et devant le véhicule automobile muni d'un tel système d'entrée d'air avec une grille.

Dans le document EP 2 591 930, on décrit un dispositif d'obturation ménagé à l'arrière de la grille d'entrée d'air et qui est constitué d'un ensemble de volets pivotants qui en position de volets fermés est équivalent à une paroi d'obturation, les volets s'étendant verticalement, perpendiculaires au sens de l'entrée d'air. Pour ouvrir l'entrée d'air, on fait pivoter les volets.

Par conséquent, le problème à la base de la présente invention est pour un système d'entrée d'air se trouvant sur la face avant d'un véhicule automobile, de rendre la paroi d'obturation intégrée dans ce système aussi peu visible que possible.

Pour atteindre cet objectif, il est prévu selon l'invention un système d'entrée d'air, destiné à une face avant de véhicule automobile, comprenant une grille d'entrée d'air formant une partie avant du système par laquelle un flux d'air venant de l'extérieur pénètre perpendiculairement à la grille et une paroi d'obturation au moins partielle du flux d'air s'étendant en aval d'au moins une portion de la grille, le système présentant des portions supérieure et inférieure en référence à la paroi d'obturation positionnée sensiblement verticalement, caractérisé en ce que la paroi présente une suite de portions de paroi inclinées par rapport à la verticale d'un angle d'inclinaison suffisant pour que des rayons lumineux incidents provenant de devant la grille et se réfléchissant sur la paroi soient redirigés en direction d'une zone se trouvant devant et en dessous de la portion inférieure du système.

L'effet technique est d'obtenir, pour des rayons lumineux en provenance de devant le véhicule automobile donc devant le système d'entrée d'air, leur réflexion dans la zone se trouvant devant et en dessous de la portion inférieure du système, donc vers le sol devant le véhicule en position montée du système sur le véhicule. De tels rayons réfléchis ne peuvent pas être captés par les yeux d'une personne se trouvant devant le véhicule donc devant le système d'entrée d'air, ce qui occulte la vision de la paroi d'obturation du système à cette personne.

Le fait d'incliner la paroi d'obturation en aval de la grille ne nécessite aucun changement dans la conception du système d'entrée d'air ni l'ajout de nouvelles pièces et ne demande aucun outillage spécifique pour son montage. La paroi d'obturation peut présenter les mêmes points d'ancrage dans la partie supérieure ou inférieure du système d'entrée d'air.

Avantageusement, la grille présente des barreaux parallèles et espacés les uns des autres d'un même intervalle, ces barreaux s'étendant perpendiculairement au flux d'air pénétrant dans le système.

Avantageusement, au niveau de chaque barreau pris dans le sens du flux d'air, la paroi d'obturation présente un coude suivi par une extrémité de début d'une portion de paroi inclinée présentant ledit angle d'inclinaison, la portion de paroi inclinée se prolongeant par une extrémité de fin jusqu'au niveau du coude suivant.

Avantageusement, chaque coude s'étend sur une longueur prédéterminée sensiblement horizontalement en direction amont du système vers une extrémité de début d'une portion de paroi inclinée.

Avantageusement, la longueur de chaque coude est prédéterminée en fonction de l'angle d'inclinaison et de l'intervalle entre deux barreaux consécutifs, afin que les extrémités de début des portions de paroi inclinée soient superposées les unes aux autres dans une direction verticale perpendiculaire au flux d'air. On peut ainsi garder les mêmes points d'ancrage dans le système d'entrée d'air pour la paroi d'obturation à portions inclinées que pour une paroi classique et la paroi selon la présente invention n'occupe pas nettement plus de place dans le système qu'une paroi d'obturation selon l'état de la technique.

Avantageusement, l'angle d'inclinaison est déterminé en fonction de l'intervalle entre deux barreaux consécutifs de la grille et des distances minimale et maximale tolérées entre la grille et la paroi d'obturation.

Avantageusement, la paroi d'obturation est disposée dans la portion supérieure du système d'entrée. Cette paroi d'obturation pourrait être aussi disposée en alternative dans la portion inférieure du système d'entrée.

Avantageusement, la paroi d'obturation comprend des moyens de déplacement augmentant ou diminuant la portion du système d'entrée obturée par la paroi d'obturation.

Avantageusement, la grille présente des éléments s'étendant transversalement aux barreaux afin de munir la grille d'un maillage en coopération des éléments avec les barreaux.

L'invention concerne aussi un véhicule automobile présentant un plancher et une face avant avec des extrémités supérieure et inférieure, l'extrémité inférieure étant la plus proche du plancher, caractérisé en ce que la face avant comprend un tel système d'entrée d'air, la portion supérieure du système étant orientée vers l'extrémité supérieure et la portion inférieure du système étant orientée vers l'extrémité inférieure de la face avant.

Dans cette conception, le système d'entrée d'air est fréquemment entouré d'un support de calandre sur toute sa périphérie, ce support étant avantageusement solidarisé avec un pare-choc avant du véhicule.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une coupe longitudinale d'une partie de face avant d'un véhicule automobile munie d'un système d'entrée d'air selon l'état de la technique,
- la figure 2 est une représentation schématique d'une coupe longitudinale d'une partie de face avant d'un véhicule automobile munie d'un système d'entrée d'air selon la présente invention avec une paroi d'obturation inclinée par rapport à la verticale,
- la figure 3 est une représentation schématique d'une vue agrandie par rapport aux figures 1 et 2 d'une coupe longitudinale d'une portion de paroi d'obturation inclinée pour un système d'entrée d'air selon la présente invention,
- la figure 4 est une représentation schématique d'une vue en perspective d'une portion de face avant de véhicule automobile munie d'un système d'entrée d'air selon la présente invention, la face avant et le système d'entrée étant montrés en demi-coupe pour que la paroi d'obturation soit visible à cette figure.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier les dimensions des différents éléments illustrés ne sont pas représentatives de la réalité.

La figure 1 a déjà été décrite dans la partie introductive de la présente demande.

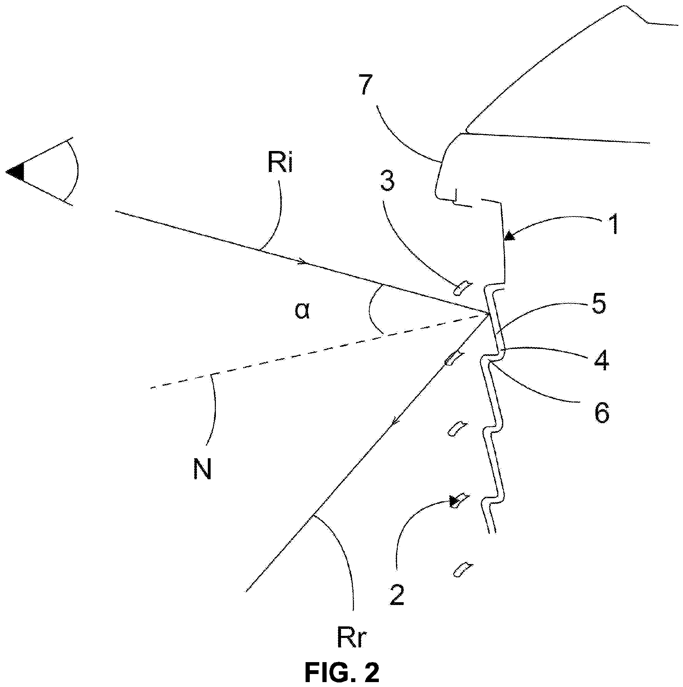

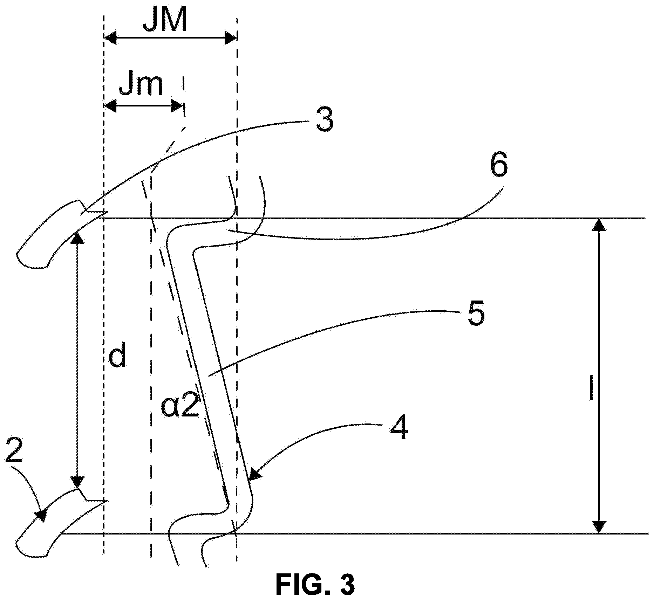

En se référant aux figures 2 à 4 et plus particulièrement aux figures 2 et 3, la présente invention concerne un système 1 d'entrée d'air, destiné à une face avant 7 de véhicule automobile. Le système 1 d'entrée d'air comprend une grille 2 d'entrée d'air formant une partie avant du système 1 par laquelle un flux d'air venant de l'extérieur pénètre perpendiculairement à la grille 2.

Le système 1 d'entrée d'air comprend aussi en son intérieur une paroi 4 d'obturation au moins partielle du flux d'air s'étendant en aval d'au moins une portion de la grille 2, le système 1 présentant des portions supérieure et inférieure en référence à une paroi 4 d'obturation positionnée sensiblement verticalement.

Selon l'invention, la paroi 4 présente une suite de portions 5 de paroi inclinées par rapport à la verticale d'un angle α2 d'inclinaison suffisant pour que des rayons lumineux incidents Ri provenant de devant la grille 2 et se réfléchissant sur la paroi 4 soient redirigés en direction d'une zone se trouvant devant et en dessous de la portion inférieure du système 1.

Dans le cas le plus fréquent pour lequel la paroi 4 d'obturation est positionnée en portion supérieure du système 1 d'entrée d'air, la paroi 4 d'obturation présente des portions de paroi 5 inclinées vers l'aval du système 1 d'entrée en considérant l'écoulement du flux d'air. Ce mode de réalisation est préféré.

Dans un autre possible mode de réalisation, pour lequel la paroi 4 d'obturation est positionnée en portion inférieure du système d'entrée, la paroi 4 d'obturation présente des portions de paroi 5 inclinées vers l'amont du système 1 d'entrée d'air pour pouvoir réfléchir les rayons lumineux incidents Ri vers le bas devant le système 1 d'entrée d'air.

Il n'est pas besoin de respecter une valeur stricte d'angle d'inclinaison α2, cet angle pouvant varier d'une paroi 4 à une autre. L'important est que les portions 5 de la paroi 4 d'obturation soient inclinées de sorte que les rayons réfléchis Ri soient dirigés devant et en dessous de la portion inférieure du système 1 d'entrée, c'est-à-dire vers le sol devant le véhicule automobile quand le système 1 d'entrée d'air est monté sur la face avant 7 du véhicule.

Il peut cependant être considéré que cet angle α2 peut être avantageusement un angle aigu relativement faible afin que la paroi 4 d'obturation n'occupe pas une grande largeur dans le système 1 d'entrée d'air.

Des caractéristiques optionnelles de la grille 2 vont maintenant être énoncées. Cette grille 2 formant la partie amont du système 1 d'entrée d'air peut présenter des barreaux 3 parallèles et espacés les uns des autres d'un même intervalle d, ces barreaux 3 s'étendant perpendiculairement au flux d'air pénétrant dans le système 1.

Aux figures 2 à 4, il est référencé par figure une seule portion inclinée 5 de paroi d'obturation et un seul barreau 3 pour la série respective des portions et des barreaux. Ce qui est énoncé pour une portion de paroi d'obturation 5 ou un barreau 3 est cependant valable pour respectivement toutes les portions de paroi d'obturation ou tous les barreaux. Il en va de même pour des coudes 6 et des éléments 8 s'étendant transversalement aux barreaux 3 qui vont être ultérieurement décrits.

Dans un mode de réalisation de la paroi 4 d'obturation avec des portions 5 de paroi inclinée par rapport à la verticale en aval du système 1 d'entrée d'air, au niveau de chaque barreau 3 pris dans le sens du flux d'air, la paroi 4 d'obturation présente un coude 6 suivi par une extrémité de début d'une portion 5 de paroi inclinée présentant ledit angle α2 d'inclinaison.

Dans ce mode de réalisation, la portion 5 de paroi inclinée se prolonge par une extrémité de fin jusqu'au niveau du coude 6 suivant. Etre au niveau d'un barreau 3 signifie que le coude 6 se trouve à la même hauteur que le barreau 3 dans le système 1 d'entrée d'air tout en étant en aval du barreau 3 dans ce système 1.

Chaque coude 6 peut s'étendre sur une longueur prédéterminée en direction aval du système 1 vers une extrémité de début d'une portion 5 de paroi inclinée, donc sensiblement en contresens du flux d'air dans le système 1. Chaque coude 6 s'étend avantageusement sensiblement horizontalement donc parallèlement au flux d'air pénétrant dans le système 1 d'entrée d'air.

La longueur de chaque coude 6 peut être prédéterminée en fonction de l'angle α2 d'inclinaison et de l'intervalle interne d entre deux barreaux 3 consécutifs, afin que les extrémités de début des portions 5 de paroi inclinées soient superposées les unes aux autres dans une direction sensiblement verticale perpendiculaire au flux d'air. La longueur I représente la distance totale entre deux coudes 6 consécutifs.

Comme le montre notamment la figure 3, l'angle α2 d'inclinaison des portions 5 de paroi inclinées peut être déterminé en fonction de l'intervalle d entre deux barreaux 3 consécutifs de la grille 2 et des distances minimale Jm et maximale JM tolérées entre la grille 2 et la paroi 4 d'obturation.

En général, une telle paroi 4 d'obturation peut être disposée dans la portion supérieure du système 1 d'entrée d'air. Ceci n'est cependant pas limitatif et la paroi d'obturation peut être disposée dans la portion inférieure du système 1 d'entrée d'air. Il est aussi usuel que la paroi 4 d'obturation comprenne des moyens de déplacement augmentant ou diminuant la portion du système 1 d'entrée obturée par la paroi 4 d'obturation.

De manière générale, une telle paroi 4 d'obturation n'apporte aucune nouvelle contrainte pour sa fixation en requérant la même fixation qu'une paroi d'obturation sensiblement plane selon l'état de la technique.

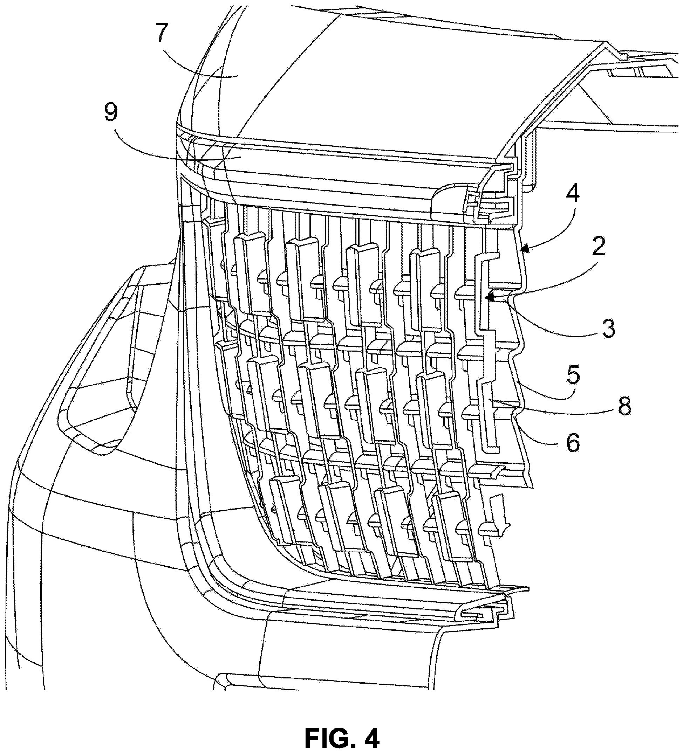

En se référant plus particulièrement à la figure 4 tout en se référant aux figures 2 et 3 pour les références non présentes à cette figure, l'invention concerne aussi un véhicule automobile présentant un plancher et une face avant 7 avec des extrémités supérieure et inférieure, l'extrémité inférieure étant la plus proche du plancher. La face avant 7 comprend un tel système 1 d'entrée d'air, la portion supérieure du système 1 étant orientée vers l'extrémité supérieure et la portion inférieure du système 1 étant orientée vers l'extrémité inférieure de la face avant 7.

Pour faire un maillage, avantageusement disposé de façon symétrique de part et d'autre d'un élément vertical central, la grille 2 d'entrée d'air comporte en plus des barreaux 3 horizontaux des éléments 8 s'étendant en direction transversale des barreaux 3, avantageusement verticaux. Les barreaux 3 horizontaux et les éléments 8 sont respectivement disposés selon un intervalle de distance sensiblement régulier.

Il est possible de prévoir des éléments 8 qui soient perpendiculaires aux barreaux 3, auquel cas le maillage peut être carré ou rectangulaire. Il est aussi possible que les éléments 8 ne soient pas forcément perpendiculaires aux barreaux 3, auquel cas le maillage peut être autre que carré ou rectangulaire.

Une calandre 9 peut entourer la grille 2 d'entrée du système 1 d'entrée d'air, la calandre 9 étant avantageusement solidarisée avec un pare-choc avant présent sur le véhicule automobile.

Les principaux avantages de la présente invention sont :
- de rendre la paroi d'obturation non visible de l'extérieur et du devant du véhicule,
- d'avoir une obturation qui s'adapte au style de la grille, cette grille comprenant avantageusement des barreaux horizontaux,
- d'améliorer la qualité perçue du véhicule,
- tout cela en ne nécessitant pas un surcoût en outillage et en prix de revient final.

L'invention n'est nullement limitée aux modes de réalisation décrits et illustrés qui n'ont été donnés qu'à titre d'exemples.

## Revendications

1. Système (1) d'entrée d'air, destiné à une face avant (7) de véhicule automobile, comprenant une grille (2) d'entrée d'air formant une partie avant du système (1) par laquelle un flux d'air venant de l'extérieur pénètre perpendiculairement à la grille (2) et une paroi (4) d'obturation au moins partielle du flux d'air s'étendant en aval d'au moins une portion de la grille (2), le système (1) présentant des portions supérieure et inférieure en référence à la paroi (4) d'obturation positionnée verticalement, la paroi (4) présentant une suite de portions (5) de paroi inclinées par rapport à la verticale d'un angle (α2) d'inclinaison suffisant pour que des rayons lumineux incidents provenant de devant la grille (2) et se réfléchissant sur la paroi (4) soient redirigés en direction d'une zone se trouvant devant et en dessous de la portion inférieure du système (1), système(1) dans lequel d'une part la grille (2) présente des barreaux (3) parallèles et espacés les uns des autres d'un même intervalle (d), ces barreaux (3) s'étendant perpendiculairement au flux d'air pénétrant dans le système (1), et **caractérisé en ce que** d'autre part au niveau de chaque barreau (3) pris dans le sens du flux d'air, la paroi (4) d'obturation présente un coude (6) suivi par une extrémité de début d'une portion (5) de paroi inclinée présentant ledit angle (α2) d'inclinaison, la portion (5) de paroi inclinée se prolongeant par une extrémité de fin jusqu'au niveau du coude (6) suivant.

2. Système (1) selon la revendication 1, dans lequel chaque coude (6) s'étend sur une longueur prédéterminée horizontalement en direction amont du système (1) vers une extrémité de début d'une portion (5) de paroi inclinée.

3. Système (1) selon la revendication 2, dans lequel la longueur de chaque coude (6) est prédéterminée en fonction de l'angle (α2) d'inclinaison et de l'intervalle (d) entre deux barreaux (3) consécutifs, afin que les extrémités de début des portions (5) de paroi inclinée soient superposées les unes aux autres dans une direction verticale perpendiculaire au flux d'air.

4. Système (1) selon l'une quelconque des revendications précédentes, dans lequel l'angle (α2) d'inclinaison est déterminé en fonction de l'intervalle (d) entre deux barreaux (3) consécutifs de la grille (2) et des distances minimale (Jm) et maximale (JM) tolérées entre la grille (2) et la paroi (4) d'obturation.

5. Système (1) selon l'une quelconque des revendications précédentes, dans lequel la paroi (4) d'obturation est disposée dans la portion supérieure du système (1) d'entrée.

6. Système (1) selon l'une quelconque des revendications précédentes, dans lequel la paroi (4) d'obturation comprend des moyens de déplacement augmentant ou diminuant la portion du système (1) d'entrée obturée par la paroi (4) d'obturation.

7. Système (1) selon l'une quelconque des revendications précédentes, dans lequel la grille présente des éléments (8) s'étendant en direction transversale des barreaux (3) afin de munir la grille (2) d'un maillage en coopération des éléments (8) avec les barreaux (3).

8. Véhicule automobile présentant un plancher et une face avant (7) avec des extrémités supérieure et inférieure, l'extrémité inférieure étant la plus proche du plancher, **caractérisé en ce que** la face avant (7) comprend un système (1) d'entrée d'air selon l'une quelconque des revendications précédentes, la portion supérieure du système (1) étant orientée vers l'extrémité supérieure et la portion inférieure du système (1) étant orientée vers l'extrémité inférieure de la face avant (7).

## Patentansprüche

1. Lufteinlasssystem (1) für eine Vorderseite (7) eines Kraftfahrzeugs, mit einem Lufteinlassgitter (2), das einen vorderen Teil des Systems (1) bildet, durch den ein Luftstrom von außen senkrecht zum Gitter (2) eindringt, und einer Wand (4) zum zumindest teilweisen Verschließen des Luftstroms, die sich stromabwärts von wenigstens einem Teil des Gitters (2) erstreckt Das System (1) weist in Bezug auf die vertikal positionierte Verschlusswand (4) obere und untere Abschnitte auf, wobei die Wand (4) eine Folge von Wandteilen (5) aufweist, die in Bezug auf die Senkrechte um einen Winkel (α2) geneigt sind, der so geneigt ist, dass einfallende Lichtstrahlen von vor dem Gitter (2) auf die Wand (4) in Richtung auf einen vor sich befindlichen Bereich umgelenkt werden und unterhalb des unteren Teils des Systems (1), wobei das Gitter (2) zum einen parallele und voneinander beabstandete Stäbe (3) mit einem gleichen Spalt (d) aufweist, wobei sich diese Stäbe (3) senkrecht zu dem in das System (1) eintretenden Luftstrom erstrecken, und **dadurch gekennzeichnet, dass** zum anderen an jedem in Strömungsrichtung eingenommenen Stab (3) Die Verschlusswand (4) weist eine Krümmung (6) auf, die von einem Startende eines geneigten Wandteils (5) gefolgt ist, der den Neigungswinkel (α2) aufweist, wobei sich der geneigte Wandteil (5) von einem Endende bis zum Niveau des nächsten Krümmers (6) erstreckt.

2. System (1) nach Anspruch 1, wobei sich jede Krümmung (6) über eine vorbestimmte Länge horizontal in Richtung stromaufwärts des Systems (1) zu einem Anfangsende eines geneigten Wandteils (5) erstreckt.

3. System (1) nach Anspruch 2, wobei die Länge jedes Krümmers (6) in Abhängigkeit von dem Neigungswinkel (α2) und dem Spalt (d) zwischen zwei aufeinander folgenden Stäben (3) vorbestimmt wird, sodass die Anfangsenden der geneigten Wandabschnitte (5) in einer vertikalen Richtung senkrecht zum Luftstrom übereinander liegen.

4. System (1) nach einem der vorhergehenden Ansprüche, wobei der Neigungswinkel (α2) in Abhängigkeit von dem Abstand (d) zwischen zwei aufeinander folgenden Stäben (3) des Gitters (2) und den minimalen (Jm) und maximalen (JM) Abständen zwischen dem Gitter (2) und der Verschlusswand (4) bestimmt wird.

5. System (1) nach einem der vorhergehenden Ansprüche, wobei die Verschlusswand (4) im oberen Abschnitt des Einlasssystems (1) angeordnet ist.

6. System (1) nach einem der vorhergehenden Ansprüche, bei dem die Verschlusswand (4) eine Bewegungseinrichtung aufweist, die den Abschnitt des Einlasssystems (1), der durch die Verschlusswand (4) verschlossen ist, vergrößert oder verringert.

7. System (1) nach einem der vorhergehenden Ansprüche, bei dem das Gitter Elemente (8) aufweist, die sich in Querrichtung der Stäbe (3) erstrecken, um das Gitter (2) mit einem Gitter in Zusammenarbeit mit den Elementen (8) mit den Stäben (3) zu versehen.

8. Kraftfahrzeug mit einem Boden und einer Vorderseite (7) mit oberen und unteren Enden, wobei das untere Ende dem Boden am nächsten ist, **dadurch gekennzeichnet, dass** die Vorderseite (7) ein Lufteinlasssystem (1) nach einem der vorhergehenden Ansprüche umfasst, wobei der obere Teil des Systems (1) dem oberen Ende zugewandt ist und der untere Teil des Systems (1) dem unteren Ende der Vorderseite (7) zugewandt ist ..

## Claims

1. Air input system (1), intended for a front face (7) of a motor vehicle, including a grid (2) of air input forming a front part of the system (1) by which a flow of air from the outside enters perpendicular to the grid (2) and a wall (4) of at least a partial obstruction of the air flow extending downstream of at least one portion of the grid (2) 2), the system (1) having upper and lower portions in reference to the vertical-positioned obturation wall (4), the wall (4) having a series of sloping portions (5) of wall relative to the vertical of an angle (2) of inclination sufficient for light rays from the front of the grid (2) and reflecting on the wall (4) to be redirected to an area located in front of and below the lower portion of the system (1), a system(1) in which, on the one hand, the grid (2) has parallel bars (3) spaced from each other in the same interval (d), those bars (3) extending perpendicular to the flow of air entering the system (1), and characterized on the other hand at the level of each bar (3) taken in the direction of the air flow, the obturation wall (4) has an elbow (6) followed by a start end of a sloped portion (5) of the wall having the sloping angle (2), the sloping portion (5) extends by a end end to the next elbow (6).

2. System (1) according to Claim 1, in which each elbow (6) extends over a predetermined length horizontally upstream of the system (1) towards a beginning end of a sloped portion (5).

3. System (1) according to Claim 2, in which the length of each elbow (6) is predetermined by the angle (2) of inclination and the interval (d) between two consecutive bars (3), so that the beginning ends of the sloping portion (5) of wall are superimposed in a vertical direction perpendicular to the air flow.

4. System (1) according to any of the preceding claims, in which the angle (2) of inclination is determined by the interval (d) between two consecutive bars (3) of the grid (2) and the permissible minimum (Jm) and maximum (JM) distances between the grid (2) and the wall (4) of obstruction.

5. System (1) according to any of the preceding claims, in which the wall (4) of shutting is arranged in the upper portion of the system (1) of entry.

6. System (1) in accordance with any of the preceding claims, in which the wall (4) of shutting includes means of moving increasing or decreasing the portion of the system (1) of entry closed by the wall (4) of shutting.

7. System (1) according to any of the preceding claims, in which the grid contains elements (8) extending in the cross-section of the bars (3) in order to provide the grid (2) with a mesh in cooperation with the elements (8) with the bars (3).

8. Motor vehicle with a floor and front face (7) with upper and lower ends, the lower end being closest to the floor, **characterized by** the front face (7) having an air inlet system (1) according to any of the previous claims, with the upper portion of the system (1) oriented towards the upper end and the lower portion of the system (1) oriented towards the lower end of the front face (7).
